# EUROPÄISCHE PATENTSCHRIFT

(11) **EP 1 651 981 B1**
(45) Veröffentlichungstag und Bekanntmachung des Hinweises auf die Patenterteilung: **09.07.2008**
(21) Anmeldenummer: 03816498.4
(22) Anmeldetag: 10.12.2003
(51) Int. Cl.: G01S 17/08, G01S 7/481, G01S 7/497, G02B 7/182

(54) **VORRICHTUNG ZUM JUSTIEREN EINES OPTISCHEN SPIEGELS**
DEVICE FOR ADJUSTING AN OPTICAL MIRROR
DISPOSITIF POUR REGLER UN MIROIR OPTIQUE

(30) Priorität: 31.03.2003 DE 10314772
(43) Veröffentlichungstag der Anmeldung: 03.05.2006
(73) Patentinhaber: ROBERT BOSCH GMBH, 70442 Stuttgart (DE)
(72) Erfinder: STIERLE, Joerg, 71111 Waldenbuch (DE); WOLF, Peter, 70771 Leinfelden-Echterdingen (DE); RENZ, Kai, 70771 Leinfelden-Echterdingen (DE); SCHULTE, Clemens, 70197 Stuttgart (DE)
(86) Internationale Anmeldenummer: PCT/DE2003/004069
(87) Internationale Veröffentlichungsnummer: WO 2004/088356

(56) Entgegenhaltungen:
- WO-A-00/36311
- WO-A-02/08692
- DE-A- 2 714 494
- DE-A- 4 221 079
- US-A- 4 648 692
- PATENT ABSTRACTS OF JAPAN Bd. 2002, Nr. 12, 12. Dezember 2002 (2002-12-12) & JP 2002 244018 A (HITACHI ELECTRONICS ENG CO LTD), 28. August 2002 (2002-08-28)
- PATENT ABSTRACTS OF JAPAN Bd. 018, Nr. 642 (P-1838), 6. Dezember 1994 (1994-12-06) & JP 06 250073 A (OPT MIHARA:KK), 9. September 1994 (1994-09-09)
- PATENT ABSTRACTS OF JAPAN Bd. 1995, Nr. 05, 30. Juni 1995 (1995-06-30) & JP 7 035856 A (OPT:KK), 7. Februar 1995 (1995-02-07)

## Beschreibung

### Stand der Technik

Die Erfindung geht aus von einer Vorrichtung zum Justieren eines optischen Spiegels nach dem Oberbegriff des Anspruchs 1.

Eine solche Justiervorrichtung wird beispielsweise in einem optischen Messgerät zur berührungslosen Abstandsmessung, insbesondere in einem als Handgerät konzipierten Laserentfernungsmesser, eingesetzt, wie es beispielsweise in der DE 198 04 051 A1 beschrieben ist. Ein solches Messgerät weist einen optischen Sendepfad zum Aussenden eines optischen Messsignals, z.B. Laserimpulsen, und einen optischen Empfangspfad zum Empfangen des reflektierten Messsignals auf. Um eine für ein Handgerät geeignete kleine Baugröße zu erreichen, werden die optischen Achsen von Sende- und Empfangspfad jeweils mittels eines optischen Spiegels gefaltet, der bei der Justierung des Messgeräts entsprechend ausgerichtet werden muss. Dabei muss mittels der Justiervorrichtung im Sendepfad die optische Achse und im Empfangspfad sowohl die optische Achse als auch der Abstand des optisches Spiegels zu einem optischen Empfänger eingestellt werden.

Aus der DE 27 14 494 A1 ist eine Justiervorrichtung für ein optisches Element bekannt, bei der das optische Element, beispielsweise ein Reflektorspiegel eines optischen Resonators, in einer an einem Widerlager gehaltenen Trägerplatte angeordnet ist Die Trägerplatte ist dabei mit durch ein Dreieck miteinander verbindbare Eckbereiche ausgebildet, an denen jeweils, beiderseits der Trägerplatte vorstehende Justierschrauben vorgesehen sind. Die Justierschrauben sind mittels einer radial wirkenden, spannzangenartigen Klemmung spielfrei und schwergängig eingestellt. Das Widerlager der DE 27 14 494 A1 ist mit drei Lagerstellen ausgebildet, wobei an jeder Lagerstelle eine die Trägerplatte umgreifende Federklammer eingehängt ist, die in der Mittelachse der Justierschraube drehbar gelagert ist und mit dem freien Ende konzentrisch gehen die Justierschraube drückt.

Aus der JP 0 62 500 73 AA ist ein Mechanismus zur Justierung von Abstand und Winkel eines Spiegels bekannt, bei dem eine konische Nut und eine V-förmige Nut auf der beweglichen Spiegelträgerplatte ausgebildet sind. Die konische Nut nimmt die Spitze einer der drei Justierschrauben der Spiegelvorrichtung, die als Mikrometerschrauben ausgebildet sind, auf. Die V-förmige Nut nimmt bei dieser Spiegelvorrichtung die Spitze einer weiteren Justierschraube auf.

### Vorteile der Erfindung

Die erfindungsgemäße Justiervorrichtung mit den Merkmalen des Anspruchs 1 hat den Vorteil, dass durch die erfindungsgemäße Ausgestaltung der Widerlager am Trägerprofil eine exakte und schnelle Justierung des Spiegels auch bei Fertigungstoleranzen bezüglich der Lage und Ausrichtung der Durchgangslöcher im Spiegelträger und der in den Durchgangslöchern geführten Gewindestifte gewährleistet ist. In keiner Justierposition kann es infolge von Fehlertoleranzen zu einer Verspannung der Justiervorrichtung kommen, was eine langwierige und weniger exakte Justierung des Spiegels zur Folge hätte.

Durch die in den weiteren Ansprüchen aufgeführten Maßnahmen sind vorteilhafte Weiterbildungen und Verbesserungen der im Anspruch 1 angegebenen Justiervorrichtung möglich.

Gemäß vorteilhafter Ausführungsformen der Erfindung sind die Widerlager in unterschiedlichen Kombinationen als Sackloch und radiale Längsnuten ausgebildet, wobei in einer Ausbildungskombination der Widerlager anstelle einer Längsnut auch eine ebene Fläche ohne Führungsfunktion für den Fußpunkt des Justierstiftes vorgesehen werden kann.

Gemäß einer vorteilhaften Ausführungsform der Erfindung sind die Justierstifte als Gewindestifte und die Durchgangslöcher als Gewindebohrungen ausgebildet und Spielfreiheit in den Gewinden hergestellt. Die Spielfreiheit der Gewinde garantiert eine exakte Justierung des Spiegels bei extrem kleinen Stellwegen. Möglichkeiten zur Herstellung der Gewindespielfreiheit sind gemäß vorteilhafter Ausführungsformen der Erfindung: Kunststoffbeschichtung der Gewinde, selbstformende Gewinde und Federelemente, die die Gewindestifte mit radialer Druckkraft beaufschlagen.

### Zeichnung

Die Erfindung ist anhand von in der Zeichnung dargestellten Ausführungsbeispielen in der nachfolgenden Beschreibung näher erläutert. Es zeigen:
- Fig. 1: eine perspektivische Unteransicht eines Gerätemoduls eines Entfernungsmessgeräts,
- Fig. 2: einen Schnitt längs der Linie II - II in Fig. 1,
- Fig. 3: einen Schnitt längs der Linie III - III in Fig. 1,
- Fig. 4: eine vergrößerte Darstellung des Ausschnitts IV in Fig. 3,
- Fig. 5: eine Draufsicht in Richtung Pfeil V in Fig. 4 bei entferntem Spiegelträger,
- Fig. 6 und 7: jeweils eine gleiche Darstellung wie in Fig. 5 gemäß zweier modifizierter Ausführungsbeispiele,
- Fig. 8: eine Draufsicht eines Federelements zur Herstellung der Spielfreiheit dreier Gewindestifte in einer Justiervorrichtung gemäß Fig. 4,
- Fig. 9: eine Draufsicht eines Gewindestifts mit einem Federelement zur Herstellung der Spielfreiheit des Gewindestiftes.

### Beschreibung der Ausführungsbeispiele

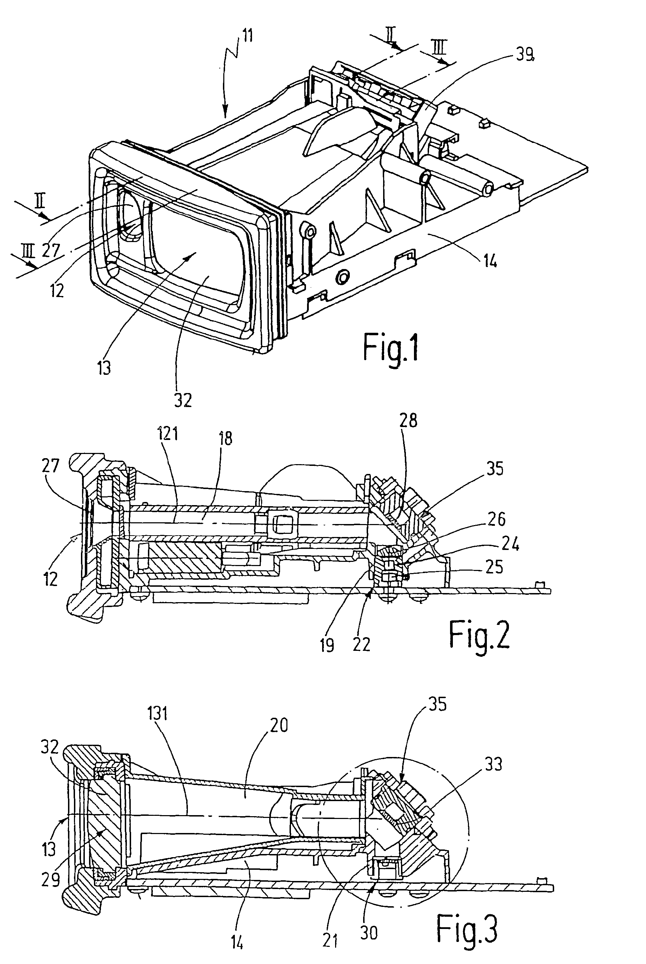

Das in Fig. 1 perspektivisch in Unteransicht und in Fig. 2 und 3 in zwei Schnittdarstellungen zu sehende Gerätemodul 11 eines Messgeräts zur berührungslosen Abstandsmessung, kurz als Entfernungsmessgerät oder Laserentfernungsmesser bezeichnet, wird nach vollständiger Montage von einem Gehäuse umschlossen. Im Gerätemodul 11 ist ein optischer Sendepfad 12 zum Aussenden eines optischen Messsignals, vorzugsweise Laserimpulsen, und ein optischer Empfangspfad 13 zum Empfang des an einem Gegenstand reflektierten Messsignals vorhanden. Das Gerätemodul 11 weist hierzu einen Optikträger 14 auf, in dem Sende- und Empfangspfad 12, 13 durch entsprechend ausgebildete Kanäle und Kammern voneinander getrennt sind. In Fig. 2 ist der Sendekanal 18 und die Sendekammer 19, die rechtwinklig zum Sendekanal 18 ausgerichtet ist, und in Fig. 3 der Empfangskanal 20 und die Empfangskammer 21 zu sehen, die ebenfalls rechtwinklig zum Empfangskanal 20 ausgerichtet ist.

Die Komponenten des optischen Sendepfads 12 sind ein optischer Sender 22, der als Kollimator 24 mit einer Kollimatorlinse 26 ausgebildet ist, eine den Sendekanal 18 frontseitig abschließende Abdeckscheibe 27 aus Glas und ein am anderen Ende des Sendekanals 18 angeordneter Umlenkspiegel 28, der justierbar am Optikträger 14 gehalten ist. Über den Umlenkspiegel 28 lässt sich die optische Achse 121 des Sendepfads 12 justieren.

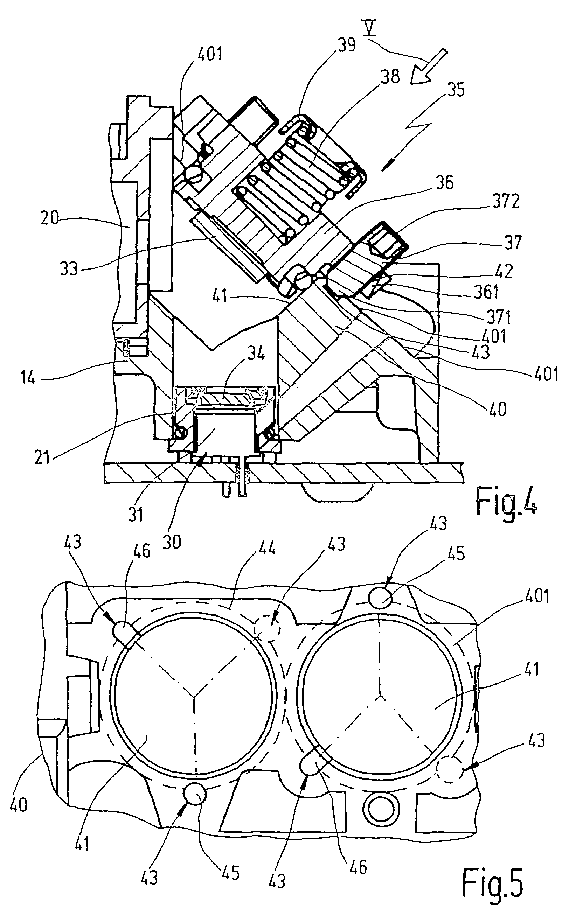

Die Komponenten des optischen Empfangspfads 13 sind eine Empfängeroptik 29, hier eine den Empfangskanal 20 frontseitig abschließende Empfängerlinse 32 mit großer Brennweite, ein am anderen Ende des Empfangskanals 20 platzierter Umlenkspiegel 33, der justierbar im Optikträger 14 gehalten ist, und ein Empfänger 30, hier ein Lichtdetektor 31 mit Filter 34 (Fig. 4). Über den Umlenkspiegel 33 lässt sich sowohl der Brennpunkt auf dem Lichtdetektor 31 als auch die Richtung der optischen Achse 131 des Empfangspfads 13 verändern und justieren.

Die Justierung des Umlenkspiegels 28 im Sendepfad 12 und des Umlenkspiegels 33 im Empfangspfad 13 erfolgt mittels einer jeweils dem Umlenkspiegel 28 bzw. 33 zugeordneten Justiervorrichtung 35. Die Justiervorrichtung 35 für den Umlenkspiegel 28 und die Justiervorrichtung 35 für den Umlenkspiegel 33 sind gleich ausgebildet, so dass nachfolgend anhand der vergrößerten Darstellung in Fig. 4 lediglich die dem Umlenkspiegel 33 im Empfangspfad 13 zugeordnete Justiervorrichtung 35 beschrieben wird. Diese Beschreibung gilt gleichermaßen für die Justiervorrichtung 35 des im optischen Sendepfad 12 angeordneten Umlenkspiegels 28.

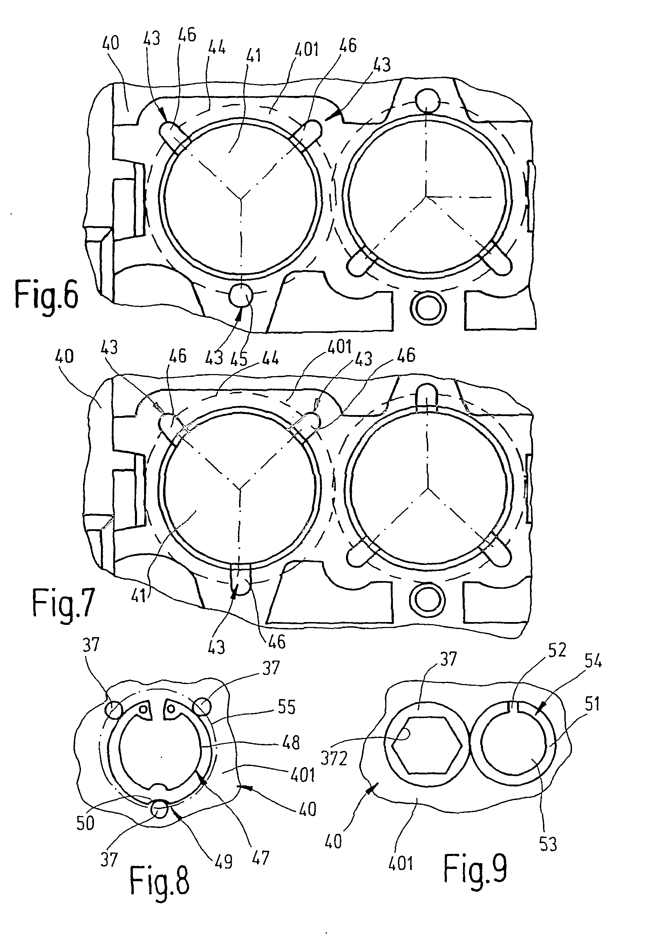

Die Justiervorrichtung 35 weist einen als Druckgussteil gefertigten Spiegelträger 36 mit Justierflansch 361, drei Justierstifte 37, eine Druckfeder 38 und einen Federbügel 39 auf, wobei der Federbügel 39, wie dies in Fig. 1 zu sehen ist, den beiden Justiervorrichtungen 35 für Umlenkspiegel 28 und Umlenkspiegel 33 gemeinsam ist. Am Optikträger 14 ist ein Trägerprofil 40 mit einer ebenen Profilfläche 401 ausgebildet. Im Trägerprofil 40 ist eine kreisförmige Ausnehmung 41 eingebracht, in die der Spiegelträger 36 so eingesetzt ist, dass der auf dem Spiegelträger 36 aufgeklebte Umlenkspiegel 33 in den Empfangskanal 20 hineinragt. In dem Justierflansch 361 sind drei in Umfangsrichtung des Spiegelträgers 36 auf einem Teilerkreis 55 (Fig. 8) um Drehwinkel zueinander versetzt angeordnete Gewindebohrungen 42 eingebracht, in die jeweils ein als Gewindestift ausgebildeter Justierstift 37 hindurchgeschraubt ist. Zum Drehen der Justierstifte 37 sind diese mit einem Innensechskant 372 versehen. Der Spiegelträger 36 wird mittels der Druckfeder 38, die sich an dem am Optikträger 14 befestigten Federbügel 39 abstützt, in die Ausnehmung 41 soweit hineingeschoben, bis sich die Fußpunkte 371 der Justierstifte 37 an drei in der Profilfläche 401 des Trägerprofils 40 ausgebildeten Widerlagern 43 abstützen und gegen die Profilfläche 401 verspannt sind. Wie die Justierstifte 37 sind die Widerlager 43 auf einem zur Ausnehmung 41 konzentrischen Teilerkreis 44 mit gleichem Kreisradius mit den Drehwinkelabständen der Justierstifte 37 entsprechenden Drehwinkelabständen zueinander angeordnet (Fig. 5). Die Widerlager 43 sind dabei so ausgebildet, dass sie einerseits den Spiegelträger 36 über die Justierstifte 37 in der Ausnehmung 41 zentrieren und andererseits mindestens zwei Widerlager 43 ein radiales Auswandern des Fußpunkts 371 des jeweiligen Justierstifts 37 ermöglichen.

Im Ausführungsbeispiel gemäß Fig. 5 ist ein erstes Widerlager 43 als Sackloch 45 und das zweite Widerlager 43 als radiale Längsnut 46 ausgeführt. Das in Fig. 5 punktiert angedeutete dritte Widerlager 43 wird von der ebenen Profilfläche 401 des Trägerprofils 40 gebildet. Der Durchmesser des Sacklochs 45 und die Nutbreite der radialen Längsnut 46 werden wenig größer bemessen als der Außendurchmesser der zugeordneten Justierstifte 37 in deren Fußpunkt 371. Dadurch wird eine Zentrierung des Spiegelträgers 36 konzentrisch zur Aufnahme 41 sichergestellt. Beim Verdrehen der Justierstifte 37 ermöglicht die Längsnut 46 das Auswandern des Fußpunkts 371. In Fig. 5 ist noch die benachbarte Ausnehmung 41 mit gleich ausgebildeten Widerlagern 43 zur Aufnahme der Justiervorrichtung 35 für den Umlenkspiegel 28 im Sendepfad 12 zu sehen.

Mittels der Justiervorrichtung 35 wird die optische Achse 131 des Empfangspfads 13 so eingestellt, dass ein in der optischen Achse 131 einfallendes Messsignal lagerichtig auf den Lichtdetektor 31 des Empfänger 30 umgelenkt wird. Gleichzeitig wird auch der Abstand des Umlenkspiegels 33 von dem Lichtdetektor 31 eingestellt, damit der Brennpunkt der Empfängeroptik 29 auf dem Lichtdetektor 31 zu liegen kommt. Hierzu werden die drei Justierstifte 37 mehr oder weniger in den Gewindebohrungen 42 verdreht, um den Spiegelträger 36 und damit den Umlenkspiegel 33 mehr oder weniger gegenüber dem Trägerprofil 40 anzuheben oder abzusenken und/oder zu kippen.

Für eine exakte Justierung des Umlenkspiegels 33 ist die Gewindeverbindung zwischen Justierstift 37 und Spiegelträger 36 spielfrei ausgeführt. Dies kann durch Kunststoffbeschichtung des Justierstiftes 37 und/oder der Gewindebohrung 42 bewirkt werden. Zum gleichen Zweck kann das Gewinde der Justierstifte 37 selbstformend ausgebildet werden. Die Spielfreiheit kann aber auch durch ein Federelement herbeigeführt werden, das eine radial Druckkraft am Justierstift 37 erzeugt, oder durch andere geläufige Maßnahmen.

Mit dem Federelement 47 gemäß dem Ausführungsbeispiel der Fig. 8 wird die radiale Druckkraft an allen drei Justierstiften 37 durch einen unter Vorspannung stehenden, sich aufspreizenden Sprengring 48 erzeugt, der unter federelastisches Zusammendrücken seiner einander gegenüberliegenden Ringenden innerhalb des Teilerkreises 55 zwischen die drei Justierstifte 37 eingesetzt werden kann. Nach Freigeben des Sprengrings 48 legt dieser sich mit einer radial nach außen gerichteten Druckkraft an die drei Justierstifte 37 an. Der Sprengring 48 ist mit einer Verdrehsicherung 49 versehen, die von einer einen Justierstift 37 teilweise umgreifenden Einwölbung 50 gebildet ist.

In dem Ausführungsbeispiel der Fig. 9 wird als Federelement 54 zur Herbeiführung der Spielfreiheit am Justierstift 37 eine Spannhülse 51 verwendet, die in bekannter Weise in Achsrichtung geschlitzt ist, so dass sie unter Verkleinern des axialen Längsschlitzes 52 federelastisch zusammendrückbar ist. Die Spannhülse 51 ist in ein in das Trägerprofil 40 eingebrachtes Bohrloch 53 eingesetzt. Die Achse des Bohrlochs 53 hat von der Achse des in den Justierflansch 361 eingeschraubten Justierstiftes 37 einen solchen Abstand, dass sich die Spannhülse 51 an den Justierstift 37 mit Vorspannung radial anpresst.

In Fig. 6 und 7 sind zwei Ausführungsbeispiele für mögliche Modifizierungen der Widerlager 43 in einer der Fig. 5 entsprechenden Draufsicht dargestellt. Im Ausführungsbeispiel der Fig. 6 ist das eine Widerlager 43 als Sackloch 45 und die beiden anderen Widerlager 43 als radiale Längsnuten 46 ausgeführt. Im Ausführungsbeispiel der Fig. 7 sind alle drei Widerlager 43 als radiale Längsnuten 46 ausgeführt. Wie bei dem Ausführungsbeispiel in Fig. 5 sind der Durchmesser des Sacklochs 45 und die in Umfangsrichtung gesehene Breite der radialen Längsnuten 46 jeweils geringfügig größer bemessen als der Außendurchmesser der Justierstifte 37 im Bereich ihres Eintauchens in das Sackloch 45 bzw. in die Längsnut 46. Dadurch wird wiederum die Zentrierung des Spiegelträgers 36 konzentrisch zur Ausnehmung 41 sichergestellt. Die radialen Längsnuten 46 ermöglichen ein radiales Auswandern der Fußpunkte der Justierstifte 37, so dass ein Verspannen der Justierstifte 37 beim Justieren des Umlenkspiegels 33 sicher verhindert ist.

Die Erfindung ist nicht auf die beschriebenen Ausführungsbeispiele der Justiervorrichtung 35 beschränkt. So müssen die Justierstifte 37 nicht als in Gewindelöchern verschraubbare Gewindestifte ausgeführt sein. Anstelle der Gewindebohrungen können Durchgangslöcher im Justierflansch des Spiegelträgers 36 vorgesehen werden, durch die die Justierstifte hindurchragen. In diesem Fall müssen Mittel vorgesehen werden, die eine axiale Verschiebung der Justierstifte 37 relativ zum Spiegelträger 36 ermöglichen, wobei die Axialverschiebung der Justierstifte in jeder Verschiebestellung arretierbar ist.

Die Justierstifte 37 können in ihrem auf den Widerlagern 43 sich abstützenden Fußbereich kalotten- oder kegelförmig ausgebildet sein und sich auf dem vorzugsweise abgeschrägten Randbereich der Sacklöcher 45 oder der Lagernuten 46 abstützen. Hierdurch zentrieren sich die Justierstifte 37 in den Widerlagern 43 und führen in gleicher Weise eine Zentrierung des Spiegelträgers 36 herbei. In Fig. 4 ist eine solche Ausbildung von Justierstift 37 und Widerlager 43 (Sackloch oder radiale Längsnut) dargestellt.

## Patentansprüche

1. Vorrichtung zum Justieren eines optischen Spiegels (33), mit einem den Spiegel (33) aufnehmenden Spiegelträger (36), der an einem Trägerprofil (40) gehalten ist, und mit drei durch im Spiegelträger in Umfangsrichtung zueinander versetzt angeordnete Durchgangslöcher (42) hindurchtretenden Justierstiften- (37), die relativ zum Spiegelträger (36) axial verstellbar sind und sich mit ihren Fußpunkten (371) an am Trägerprofil (40) ausgebildeten Widerlagern (43) abstutzen, **dadurch gekennzeichnet, dass** die Widerlager (43) so ausgebildet sind, dass einerseits die Widerlager (43) den Spiegelträger (36) über die Justierstifte (37) zentrieren und andererseits mindestens zwei Widerlager (43) ein radiales Auswandern des Fußpunktes (371) der Justierstifte (37) zulassen, indem zumindest ein Widerlager als radial ausgerichtete Längsnut (46) ausgebildet ist, wobei radial von der Mitte eines die Widerlager (43) umschreibenden Teilerkreises (44) in Richtung des jeweiligen Widerlagers (43) definiert ist.

2. Vorrichtung nach Anspruch 1, **dadurch gekennzeichnet, dass** ein Widerlager (43) als Sackloch (45) und ein Widerlager (43) als radial ausgerichtete Längsnut (46) ausgebildet und das dritte Widerlager (43) von einer ebenen Fläche (401) gebildet ist.

3. Vorrichtung nach Anspruch 1, **dadurch gekennzeichnet, dass** ein Widerlager (43) als Sackloch (45) und die beiden anderen Widerlager jeweils als eine radial ausgerichtete Längsnut (46) ausgebildet sind.

4. Vorrichtung nach Anspruch 1, **dadurch gekennzeichnet, dass** alle Widerlager (43) als radial ausgerichtete Längsnuten (46) ausgebildet sind.

5. Vorrichtung nach einem der Ansprüche 2 - 4, **dadurch gekennzeichnet, dass** der lichte Durchmesser des Sacklochs (45) und/oder die Breite der radial ausgerichtete Längsnut (46) so bemessen ist, dass der Fußpunkt (371) des Justierstifts (37) im Sackloch (45) bzw. in der radial ausgerichtete Längsnut (46) in Umfangsrichtung jeweils mit geringem Spiel aufgenommen ist.

6. Vorrichtung nach einem der Ansprüche 2 - 5, **dadurch gekennzeichnet, dass** die Fußbereiche der Justierstifte (37) kalotten- oder kegelförmig ausgebildet sind und auf einem vorzugsweise abgeschrägten Randbereich der Sacklöcher (45) und/oder der radial ausgerichtete Längsnuten (46) aufliegen.

7. Vorrichtung nach einem der Ansprüche 1-6, **dadurch gekennzeichnet, dass** die Justierstifte (37) als Gewindestifte und die Durchgangslöcher als Gewindebohrungen (42) ausgebildet sind und dass die Gewinde spielfrei ineinandergreifen.

8. Vorrichtung nach Anspruch 7, **dadurch gekennzeichnet, dass** das Gewinde der Justierstifte (37) und/oder das Gewinde der Gewindebohrungen (42) mit Kunststoff beschichtet ist.

9. Vorrichtung nach Anspruch 7, **dadurch gekennzeichnet, dass** das Gewinde der Justierstifte (37) selbstiformend ausgebildet ist.

10. Vorrichtung nach Anspruch 7, **dadurch gekennzeichnet, dass** die Justierstifte (37) durch ein an allen Justierstiften (37) anliegendes Federelement (47) mit einer radialen Druckkraft beaufschlagt sind.

11. Vorrichtung nach Anspruch 10, **dadurch gekennzeichnet, dass** das Federelement (47) ein unter Vorspannung sich aufspreizender Sprengring (48) ist, der innerhalb des von den Justierstiften (37) aufgespannten Teilerkreises (55) einliegt und auf die Justierstifte (37) mit einer radial nach außen gerichteten Druckkraft einwirkt.

12. Vorrichtung nach Anspruch 11, **dadurch gekennzeichnet, dass** der Sprengring (48) eine Verdrehsicherung (49) aufweist.

13. Vorrichtung nach Anspruch 7, **dadurch gekennzeichnet, dass** an jedem Justierstift (37) ein Federelement (54) mit radial gerichteter Druckkraft angreift.

14. Vorrichtung nach Anspruch 13, **dadurch gekennzeichnet, dass** das Federelement (54) als eine axial geschlitzte Spannhülse (51) ausgebildet ist, die in ein in den Spiegelträger (36) eingebrachtes Aufnahmeloch (53) eingesteckt ist, und dass das Aufnahmeloch (53) einen solchen radialen Abstand von der Gewindebohrung (42) aufweist, dass die Spannhülse (51) sich radial an den Justierstift (37) anpresst.

15. Vorrichtung nach einem der Ansprüche 1 - 14, **gekennzeichnet durch** ihre Verwendung in einem optischen Messgerät zur berührungslosen Abstandsmessung, vorzugsweise in einem als Handgerät ausgebildeten Laserentfemungsmesser.

16. Messgerät zur berührungslosen Abstandsmessung, insbesondere als Handgerät ausgebildeter Laserentfernungsmesser, mit einem optischen Sendepfad (12) zum Aussenden eines optischen Messsignals und einem optischen Empfangspfad (13) zum Empfangen des reflektierten Messsignals sowie mit mindestens einem in einem der optischen Pfade (12, 13) angeordneten Umlenkspiegel (28, 33) zum Falten der optischen Achse (121, 131) des optischen Pfads (12,13), **gekennzeichnet durch** eine den Umlenkspiegel (28, 33) zugeordnete Justiervorrichtung (35) nach einem der Ansprüche 1-14.

## Claims

1. Device for adjusting an optical mirror (33), having a mirror carrier (36) which holds the mirror (33) and which is secured to a carrier profile (40), and having three adjusting pins (37) which pass through holes (42) which are arranged offset with respect to one another in the circumferential direction in the mirror carrier and which can be adjusted axially in relation to the mirror carrier (36), and are supported with their base points (371) on counter bearings (43) which are embodied on the carrier profile (40), **characterized in that** the counter bearings (43) are embodied in such a way that, on the one hand, the counter bearings (43) centre the mirror carrier (36) by means of the adjusting pins (37), and, on the other hand, at least two counter bearings (43) permit the base point (371) of the adjusting pins (37) to migrate radially by virtue of the fact that at least one counter bearing is embodied as a radially oriented longitudinal groove (46), wherein radially from the centre of a pitch snap ring (44) which surrounds the counter bearings (43) is defined in the direction of the respective counter bearing (43).

2. Device according to Claim 1, **characterized in that** one counter bearing (43) is embodied as a blind hole (45), and one counter bearing (43) is embodied as a radially oriented longitudinal groove (46), and the third counter bearing (43) is formed by a planar surface (401).

3. Device according to Claim 1, **characterized in that** one counter bearing (43) is embodied as a blind hole (45), and the two other counter bearings are each embodied as a radially oriented longitudinal groove (46).

4. Device according to Claim 1, **characterized in that** all the counter bearings (43) are embodied as radially oriented longitudinal grooves (46).

5. Device according to one of Claims 2-4, **characterized in that** the clear diameter of the blind hole (45) and/or the width of the radially oriented longitudinal groove (46) are dimensioned in such a way that the base point (371) of the adjusting pin (37) is held in the blind hold (45) or, respectively, in the radially oriented longitudinal groove (46) in the circumferential direction, in each case with a small amount of play.

6. Device according to one of Claims 2-5, **characterized in that** the base areas of the adjusting pins (37) are dome-shaped or conical and rest on a preferably bevelled edge region of the blind holes (45) and/or of the radially oriented longitudinal grooves (46).

7. Device according to one of Claims 1-6, **characterized in that** the adjusting pins (37) are embodied as threaded pins and the holes are embodied as threaded bores (42), and **in that** the threads engage one in the other without play.

8. Device according to Claim 7, **characterized in that** the thread of the adjusting pins (37) and/or the thread of the threaded bores (42) is/are coated with plastic.

9. Device according to Claim 7, **characterized in that** the thread of the adjusting pins (37) is of self-tapping design.

10. Device according to Claim 7, **characterized in that** a radially compressive force is applied to the adjusting pins (37) by a spring element (47) which bears on all the adjusting pins (37).

11. Device according to Claim 10, **characterized in that** the spring element (47) is a circlip (48) which spreads apart under prestress, fits within the pitch snap ring (55) which is described by the adjusting pins (37), and acts on the adjusting pins (37) with a radially outwardly directed compressive force.

12. Device according to Claim 11, **characterized in that** the circlip (48) has an antitwist means (49).

13. Device according to Claim 7, **characterized in that** a spring element (54) acts with a radially directed compressive force on each adjusting pin (37).

14. Device according to Claim 13, **characterized in that** the spring element (54) is embodied as an axially slotted clamping sleeve (51) which is plugged into a receiving hole (53) which is made in the mirror carrier (36), and **in that** the receiving hole (53) is at such a radial distance from the threaded bore (42) that the clamping sleeve (51) presses radially against the adjusting pin (37).

15. Device according to one of Claims 1-14, **characterized by** its use in an optical measuring device for contactless measurement of distances, preferably in a laser distance measuring device which is embodied as a handheld device.

16. Measuring device for contactless measurement of distances, in particular a laser distance measuring device which is embodied as a handheld device, having an optical sending path (12) for emitting an optical measuring signal and an optical receiving path (13) for receiving the reflected measuring signal, and having at least one deflection mirror (28, 33) which is arranged in one of the optical paths (12, 13) and has the purpose of folding the optical axis (121, 131) of the optical path (12, 13), **characterized by** an adjusting device (35) which is assigned to the deflection mirror (28, 33), according to one of Claims 1-14.

## Revendications

1. Dispositif pour ajuster un miroir optique (33) comportant un support de miroir (36) recevant le miroir (33), ce support étant porté par un profil de support (40) ainsi que trois broches d'ajustage (37) traversant des orifices (42) prévus dans le support de miroir et décalés dans la direction périphérique, ces broches étant réglables axialement par rapport au support de miroir (36) et s'appuyant par des pieds (371) contre les appuis (43) réalisés sur le profil de support (40),
**caractérisé en ce que**
les appuis (43) sont réalisés pour que d'une part ils (43) assurent le centrage du support de miroir (36) par les broches d'ajustage (37) et que d'autre part au moins deux appuis (43) autorisent un déplacement radial du pied (371) des broches d'ajustage (37) **en ce qu'**au moins un appui est réalisé sous la forme d'une rainure longitudinale (46) alignée dans la direction radiale, l'expression radiale étant définie à partir du milieu d'un cercle diviseur (44) circonscrit à l'appui (43), dans la direction de l'appui (43) respectif.

2. Dispositif selon la revendication 1,
**caractérisé en ce qu'**
un appui (43) est réalisé comme perçage borgne (45) et un appui (43) est réalisé comme rainure longitudinale (46) alignée dans la direction radiale et le troisième appui (43) est formé par une surface plane (401).

3. Dispositif selon la revendication 1,
**caractérisé en ce qu'**
un appui (43) est réalisé comme perçage borgne (45) et les deux autres appuis sont réalisés chacun par une rainure longitudinale (46) alignée dans la direction radiale.

4. Dispositif selon la revendication 1,
**caractérisé en ce que**
tous les appuis (43) sont réalisés sous la forme de rainures longitudinales (46) alignées dans la direction radiale.

5. Dispositif selon l'une des revendications 2 à 4,
**caractérisé en ce que**
le diamètre libre du perçage borne (45) et/ou la largeur de la rainure longitudinale (46) alignée dans la direction radiale sont dimensionnés pour que le pied (371) de la broche d'ajustage (37) se loge dans le perçage borgne (45) ou dans la rainure longitudinale (46) alignée dans la direction radiale, suivant la direction périphérique chaque fois avec un faible jeu.

6. Dispositif selon l'une des revendications 2 à 5,
**caractérisé en ce que**
les zones des talons des broches d'ajustage (37) ont une forme de calotte ou de tronc de cône et s'appuient sur une surface de bord de préférence inclinée des perçages borgnes (45) et/ou des rainures longitudinales (46) alignées dans la direction radiale.

7. Dispositif selon l'une des revendications 1 à 6,
**caractérisé en ce que**
les broches d'ajustage (37) sont des broches filetées et les orifices traversants sont des taraudages (42) et **en ce que** les filetages se pénètrent sans jeu.

8. Dispositif selon la revendication 7,
**caractérisé en ce que**
le filetage des broches d'ajustage (37) et/ou le filetage des taraudages (42) est muni d'un revêtement en matière plastique.

9. Dispositif selon la revendication 7,
**caractérisé en ce que**
le filetage des broches d'ajustage (37) est auto-taraudeur.

10. Dispositif selon la revendication 7,
**caractérisé en ce que**
les broches d'ajustage (37) sont sollicitées par une poussée radiale appliquée par un élément de ressort (47) qui s'appuie contre toutes les broches d'ajustage (37).

11. Dispositif selon la revendication 10,
**caractérisé en ce que**
l'élément de ressort (47) est un anneau élastique (48) qui s'ouvre sous une précontrainte, cet anneau étant appliqué dans un cercle diviseur sous-tendu par les broches d'ajustage (37) et il agit sur chaque broche d'ajustage (37) avec une poussée dirigée radialement vers l'extérieur.

12. Dispositif selon la revendication 11,
**caractérisé en ce que**
l'anneau élastique (48) comporte un moyen de blocage en rotation (49).

13. Dispositif selon la revendication 7,
**caractérisé par**
un élément de ressort (54) exerçant une poussée dirigée radialement sur chaque broche d'ajustage (37).

14. Dispositif selon la revendication 13,
**caractérisé en ce que**
l'élément de ressort (54) est constitué par un manchon de serrage (51) fendu axialement, qui est engagé dans un orifice de réception (53) réalisé dans le support de miroir (36) et
l'orifice de réception (53) a une distance radiale par rapport au taraudage (42) pour que le manchon de serrage (51) soit pressé radialement contre la broche d'ajustage (37).

15. Dispositif selon l'une des revendications 1 à 14,
**caractérisé par**
son application à un appareil de mesure optique pour mesurer une distance sans contact, de préférence dans un télémètre laser réalisé sous forme d'appareil à main.

16. Appareil de mesure pour une mesure de distance sans contact, notamment comme télémètre laser réalisé sous forme d'appareil à main, comportant un chemin d'émission optique (12) pour émettre un signal de mesure optique et un chemin de réception optique (13) pour recevoir le signal de mesure réfléchi ainsi qu'au moins un miroir de renvoi (28, 33) installé dans l'un des chemins optiques (12, 13) pour renvoyer l'axe optique (121, 131) du chemin optique (12, 13),
**caractérisé par**
un dispositif d'ajustage (35) selon l'une des revendications 1 à 14 pour le miroir de renvoi (28, 33).
